# EUROPÄISCHE PATENTSCHRIFT

(11) **EP 0 921 038 B1**
(45) Veröffentlichungstag und Bekanntmachung des Hinweises auf die Patenterteilung: **11.09.2002**
(21) Anmeldenummer: 98123187.1
(22) Anmeldetag: 04.12.1998
(51) Int. Cl.: B60R 11/02

(54) **Haltevorrichtung für eine Telefoneinheit**
Holder for a telephone apparatus
Dispositif support d'un appareil téléphonique

(30) Priorität: 05.12.1997 DE 19754115
(43) Veröffentlichungstag der Anmeldung: 09.06.1999
(73) Patentinhaber: Nokia Corporation, 02150 Espoo (FI)
(72) Erfinder: Klammer, Wolfgang, 44581 Castrop-Rauxel (DE); Matthies, Jürgen, 58455 Witten (DE); Willsch, Reinhard, 46236 Bottrop (DE); Phillips, Sheldon, Agoura, CA 91301 (US); Bourghardt, Jonas H., Ventura, CA 93001 (US); Schneider, Dirk, 44289 Dortmund (DE)
(74) Vertreter: Urner, Peter, Dipl.-Phys.

(56) Entgegenhaltungen:
- WO-A-97/25223
- DE-A- 3 700 614
- DE-A- 4 015 091
- PATENT ABSTRACTS OF JAPAN vol. 018, no. 083 (M-1558), 10. Februar 1994 (1994-02-10) & JP 05 294190 A (MATSUSHITA ELECTRIC IND CO LTD), 9. November 1993 (1993-11-09)
- PATENT ABSTRACTS OF JAPAN vol. 016, no. 027 (E-1158), 23. Januar 1992 (1992-01-23) & JP 03 240344 A (NIPPONDENSO CO LTD), 25. Oktober 1991 (1991-10-25)

## Beschreibung

Die Erfindung betrifft eine Haltevorrichtung gemäß dem Oberbegriff des Patentanspruchs 1 zur zum Beispiel klemmenden Aufnahme einer Telefoneinheit, insbesondere eines Handapparats eines Autotelefons oder eines Mobiltelefons, mit zwei zur Positionierung der Telefoneinheit im Abstand zueinander angeordneten Seitenwänden. Üblicherweise wird die Telefoneinheit so zwischen den Seitenwänden positioniert, daß eine Hauptfläche der Telefoneinheit, also eine vorderseitige oder rückseitige Fläche der Telefoneinheit, senkrecht zu den Seitenwänden zu liegen kommt. Die Haltevorrichtung lädt daher relativ breit aus, was in vielen Fällen von Nachteil ist, insbesondere dann, wenn zur Unterbringung der Haltevorrichtung nur wenig Platz zur Verfügungsteht, wie zum Beispiel im Bereich der Mittelarmlehne eines Pkw's. Seitlich neben der Haltevorrichtung lassen sich dann nur noch wenige andere Dinge unterbringen, was oft einen Mangel darstellt.

Die Merkmale des Oberbegriffs von Anspruch 1 sind aus DE-A-4 015 091 bekannt.

Der Erfindung liegt die Aufgabe zugrunde, eine Haltevorrichtung der eingangs genannten Art zu schaffen, die weniger Platz beansprucht.

Die Lösung der gestellten Aufgabe ist im kennzeichnenden Teil des Patentanspruchs 1 angegeben. Vorteilhafte Ausgestaltungen der Erfindung sind den Unteransprüchen zu entnehmen.

Eine Haltevorrichtung nach der Erfindung zeichnet sich dadurch aus, daß der Abstand der Seitenwände kleiner ist als die Breite der Telefoneinheit, um die Telefoneinheit in einer ersten Position zwischen sich aufzunehmen, in der Hauptflächen der Telefoneinheit den Seitenwänden gegenüberliegen, und um die Telefoneinheit in einer zweiten Position auf Längskanten der Seitenwände zu lagern, in der die Hauptflächen der Telefoneinheit quer zu den Seitenwänden liegen.

Dadurch, daß die Breite der Haltevorrichtung jetzt kleiner ist als die der Telefoneinheit, beansprucht sie weniger Platz, so daß auch in engeren Bereichen die Möglichkeit besteht, neben der Haltevorrichtung noch andere Einrichtungsgegenstände unterbringen zu können, zum Beispiel auch eine zweite Haltevorrichtung, um in dieser zum Beispiel ein Mobiltelefon zu lagern, während in der ersten Haltevorrichtung der Handapparat eines Autotelefons untergebracht ist.

Nach einer vorteilhaften Weiterbildung der Erfindung entspricht der Abstand der Seitenwände der Haltevorrichtung wenigstens annähernd der Dicke der Telefoneinheit. Als Dicke der Telefoneinheit soll dabei im wesentlichen derjenige Abstand verstanden werden, der zwischen der vorderseitigen Hauptfläche und der rückseitigen Hauptfläche der Telefoneinheit liegt. Dadurch kann die Haltevorrichtung noch schmaler ausgebildet werden.

Nach einer Ausgestaltung der Erfindung können die Seitenwände der Haltevorrichtung parallel zueinander verlaufen, so daß die Haltevorrichtung selbst einen einfachen Aufbau aufweist und möglichst einfach herstellbar ist. Die Seitenwände können aber auch in ihrem Abstandsverlauf dem Verlauf der Hauptflächen der Telefoneinheit angepaßt sein, um zu einer noch kompakteren Haltevorrichtung zu kommen.

Wie sich aus dem eingangs Gesagten ergibt, kann die Telefoneinheit bei nicht beabsichtigter Benutzung im wesentlichen vollständig in der Haltevorrichtung versenkt sein, wobei dann die Hauptflächen der Telefoneinheit im wesentlichen den Seitenwänden der Haltevorrichtung gegenüberliegen. Die erfindungsgemäße Haltevorrichtung bietet aber auch die Möglichkeit, die Telefoneinheit auf der Haltevorrichtung zu lagern, wenn Umstände dies wünschenswert erscheinen lassen und das Raumangebot dem nicht entgegensteht. Um in diesem Fall ebenfalls zu einer kompakten Einheit zu kommen, kann vorteilhaft die Kontur der Seitenwand-Längskanten, auf denen die Telefoneinheit in der zweiten Position mit ihrer einen Hauptfläche zu liegen kommt, an die Kontur dieser einen Hauptfläche angepaßt sein.

Nach einer weiteren Ausgestaltung der Erfindung ist in einem stirnseitigen Bereich der Seitenwände ein fester und in Richtung zum anderen stirnseitigen Bereich der Seitenwände weisender Bügel angeordnet, der die Seitenwände in Höhenrichtung so weit überragt, daß er ein Ende der Telefoneinheit, die sich sowohl in der ersten als auch in der zweiten Position befinden kann, übergreift. Durch diesen Bügel wird quasi ein Gegenlager für die Telefoneinheit gebildet, gegen das sie mehr oder weniger stark gedrückt wird, wenn sie sich in bzw. auf der Haltevorrichtung befindet. Dabei ist in aller Regel das gegen den Bügel gedrückte Ende der Telefoneinheit deren unteres Ende, also das Ende, das im Falle eines Mobiltelefons dem oberen antennenseitigen Ende gegenüberliegt, oder das Ende, aus dem im Falle eines Handapparats für ein Autotelefon die Leitungsverbindung herausgeführt ist.

Gerade in Bezug auf den letzten Fall kann der genannte Bügel zusätzlich einen mittigen Schlitz aufweisen, durch den die aus dem Handapparat herausgeführte Leitung hindurchgeführt wird, wenn dieser auf der Haltevorrichtung liegt.

Am genannten anderen stirnseitigen Bereich der Seitenwände ist in Übereinstimmung mit der Erfindung z. B. an einer schwenkbaren Stirnwand wenigstens eine zur genannten einen Stirnseite weisende Rastnase angeordnet, die zur Festlegung der Telefoneinheit an der Halteeinrichtung in eine entsprechende Ausnehmung an der ihr gegenüberliegenden Stirnseite der Telefoneinheit greift. Dabei kann zur Festlegung der Telefoneinheit an der Haltevorrichtung sowohl in der ersten als auch in der zweiten Position nur eine einzige Rastnase zum Einsatz kommen, die in eine entsprechend positionierte Ausnehmung an der ihr gegenüberliegenden Stirnseite der Telefoneinheit greift. Möglich ist es aber auch, bei anderer Form der Ausnehmung zwei im Abstand untereinanderliegende Rastnasen zu verwenden, die beide z. B. an der genannten schwenkbaren Stirnwand angeordnet sind. Dies wäre denkbar in einem Fall, bei dem die Ausnehmung an der Stirnseite der Telefoneinheit länglich ausgebildet ist und mit ihrer Längsrichtung parallel zu einer der Hauptflächen der Telefoneinheit liegt.

Nach einer sehr vorteilhaften anderen Weiterbildung der Erfindung ist zwischen den Seitenwänden ein verschwenkbarer und durch Preßkraft nach außen gedrückter Träger für die Telefoneinheit angeordnet. Dieser Träger wird zum Beispiel durch eine Feder ständig nach außen gepreßt, wobei sich die Verschwenkbewegung des Trägers durch eine Dämpfungseinrichtung steuern bzw. dämpfen läßt. Er dient beispielsweise dazu, die Telefoneinheit von den Seitenwänden nach oben abzuheben, nachdem sie von der Rastnase freigegeben worden ist. Dabei kann die Telefoneinheit in dieser Stellung des Trägers auf ihm verbleiben, um sie im Bedarfsfall besser ergreifen zu können. Zweckmäßigerweise sollte dann die Telefoneinheit am herausgefahrenen Träger zumindest weiterhin über Führungselemente geführt sein, um ein Herunterfallen zu vermeiden. Die Führungselemente können dabei fest an der dem Träger gegenüberliegenden Hauptfläche der Telefoneinheit vorgesehen sein, um mit dem Träger zu Haltezwecken zusammenzuwirken.

In Ausgestaltung der Erfindung kann der Träger zwei im Abstand zueinander liegende Trägerseitenwände aufweisen, wobei dieser Abstand so gewählt ist, daß er wenigstens annähernd der Dicke der Telefoneinheit im Bereich des Trägers entspricht.

Dem Träger kommen somit mehrere Funktionen zu. Einerseits verhindert er nicht das Einführen der Telefoneinheit in die Haltevorrichtung, wenn sich die Telefoneinheit in der ersten Position befindet. Andererseits ermöglicht der Träger ein Abheben der Telefoneinheit von der Haltevorrichtung nach Herausfahren der genannten Rastnase aus der stirnseitigen Ausnehmung der Telefoneinheit. Zum dritten ermöglicht der Träger eine Positionierung der Telefoneinheit in der von der Haltevorrichtung weggeschwenkten Stellung, um einen besseren Zugriff zur Telefoneinheit zu ermöglichen.

Um eine Positionierung der von der Haltevorrichtung weggeschwenkten Telefoneinheit am Träger zu gewährleisten, kann dabei der Abstand der Trägerseitenwände voneinander so gewählt sein, daß ein Eingriff von an einer Hauptfläche der Telefoneinheit angeordneten Führungen möglich ist, wenn die Telefoneinheit mit dieser Hauptfläche auf dem Träger aufliegt. Die Führungen schmiegen sich dann an die Innenseiten der Trägerseitenwände an und verhindern somit ein Herunterfallen der Telefoneinheit vom Träger, und zwar auch dann, wenn der Träger bzw. die Haltevorrichtung stärkeren Vibrationen ausgesetzt wird, da zwischen den Führungen und den Trägerseitenwänden eine Klemmwirkung ausgenutzt werden kann.

Vorzugsweise ist die zur Telefoneinheit weisende Kontur des Trägers so gewählt, daß sie bei eingeschwenktem Träger wenigstens bereichsweise mit der Kontur der Seitenwand-Längskanten zur Deckung kommt bzw. nicht über diese hinaussteht. Dadurch wird sichergestellt, daß auch bei Verwendung eines Trägers die Haltevorrichtung und die auf sie aufgesetzte Telefoneinheit stets eine kompakte Einheit bilden.

Dabei kann der Träger sich zum Beispiel bis in innenseitige Ausnehmungen der Seitenwände hineinerstrecken, so daß der Abstand der Trägerseitenwände voneinander dem Abstand der Seitenwände der Haltevorrichtung voneinander entsprechen kann.

Außerdem werden dann durch die innenseitigen Ausnehmungen erhaltenen Kanten der Seitenwände als Anschlag für den Träger verwendbar, wenn dieser durch die Preßkraft herausgeschwenkt wird, wodurch sich in einfacher Weise der Verschwenkbereich des Trägers einstellen läßt.

Die Haltevorrichtung kann mit ihren einzelnen Teilen an einer Unterlage montiert werden, ist jedoch vorzugsweise auch als separate Baueinheit mit Boden ausgebildet, um die Montage zu vereinfachen. Dabei kann an dem zur schwenkbaren Stirnwand weisenden bodenseitigen Ende des Trägers eine frei schwenkbare und mit ihrem freien Ende den Boden erreichende Sperre angeordnet sein, etwa eine um eine Achse schwenkbare Klappe, um zu verhindern, daß versehentlich Gegenstände unter den Träger gelangen.

Grundsätzlich kann die Haltevorrichtung so montiert werden, daß der Boden nahezu horizontal und die Seitenwände vertikal liegen oder daß der Boden vertikal und die Seitenwände horizontal liegen. Möglich ist es aber auch, Boden und Seitenwände vertikal auszurichten, etwa in dem Fall, bei dem die Telefoneinheit aufrecht gehalten werden soll, etwa an einer Wand.

Ein Ausführungsbeispiel der Erfindung wird nachfolgend unter Bezugnahme auf die Zeichnung im einzelnen beschrieben. Dabei sind durchgehend gleiche Teile mit den gleichen Bezugszeichen versehen. Es zeigen:
**Figur 1** eine perspektivische Ansicht der erfindungsgemäßen Haltevorrichtung;
**Figur 2** die Haltevorrichtung nach Figur 1 mit aufgesetztem Handapparat eines Autotelefons, wobei der Handapparat mit der Haltevorrichtung nicht verriegelt ist und sich in seiner zweiten Position befindet;
**Figur 3** eine der Figur 2 entsprechende Darstellung, wobei jetzt jedoch der Handapparat verriegelt ist;
**Figur 4** eine vergrößerte Teildarstellung von Figur 3 im Bereich der Rastnase;
**Figur 5** eine perspektivische Ansicht einer Haltevorrichtung mit darin verriegeltem Handapparat, der sich in der ersten Position befindet;
**Figur 6** einen Längsschnitt durch Haltevorrichtung und Telefoneinheit, ausgestattet mit Permanentmagnet und Hallelement-Schalter, wobei sich die Telefoneinheit in der zweiten Position befindet;
**Figur 7** einen Querschnitt durch die Telefoneinheit im Bereich des Hallelement-Schalters, wobei sich die Telefoneinheit in der zweiten Position befindet;
**Figur 8** einen Längsschnitt durch Haltevorrichtung und Telefoneinheit, ausgestattet mit Permanentmagnet und Hallelement-Schalter, wobei sich die Telefoneinheit in der ersten Position befindet; und
**Figur 9** einen Querschnitt durch die Telefoneinheit im B ereich des Hallelement-Schalters, wobei sich die Telefoneineheit in der ersten Position befindet.

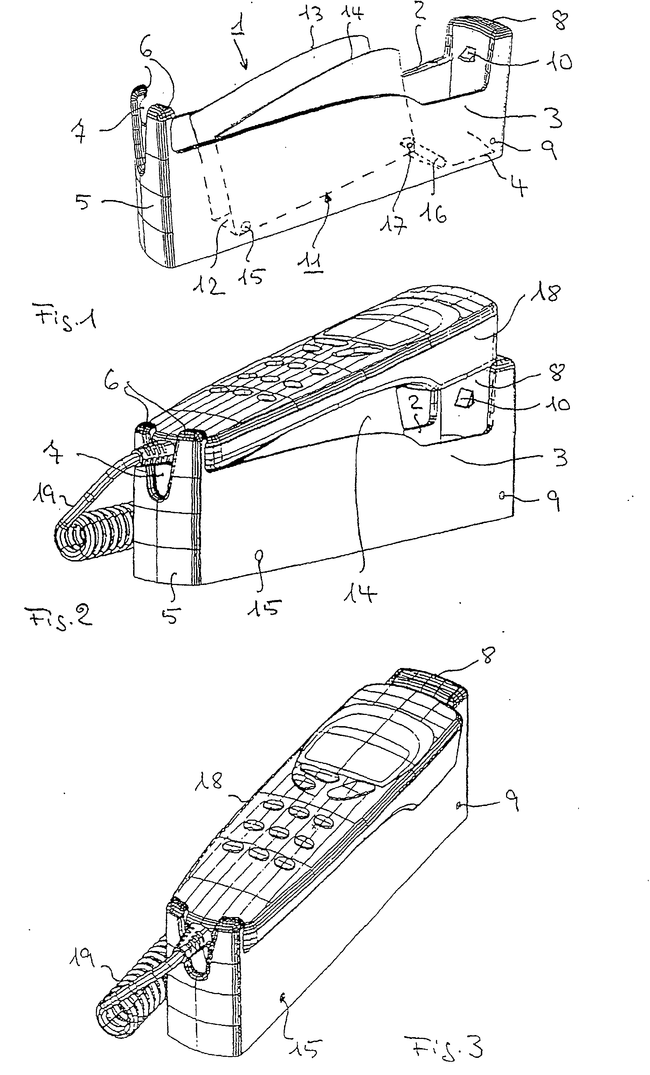

Die Figur 1 zeigt ein Ausführungsbeispiel einer Haltevorrichtung nach der Erfindung. Die Haltevorrichtung trägt das Bezugszeichen 1 und weist zwei im Abstand parallel zueinander liegende Seitenwände 2 und 3 auf, die über einen Boden 4 miteinander verbunden sind. Dabei stehen die Seitenwände 2 und 3 nahezu senkrecht zum Boden 4. An einem stirnseitigen Ende der Seitenwände 2, 3 befindet sich eine mit den Seitenwänden 2, 3 und dem Boden 4 fest verbundene Stirnwand 5, die in ihrem oberen Bereich, der die Seitenwände 2 und 3 nach oben überragt, nach innen umgebogen ist, um eine Art Bügel 6 zu bilden. Dabei ragt von oben mittig ein Schlitz 7 in die Stirnwand 5 hinein, um einen Durchtritt eines Kabels zu ermöglichen, wie noch beschrieben wird.

An dem der Stirnwand 5 gegenüberliegenden stirnseitigen Bereich der Seitenwände 2, 3 befindet sich eine verschwenkbare Stirnwand 8. Diese verschwenkbare Stirnwand 8 liegt zwischen den Seitenwänden 2 und 3 und ist in ihrem unteren Bereich mittels einer Achse 9 schwenkbar an den Seitenwänden 2 und 3 gelagert. Die Achse 9 verläuft dabei parallel zum Boden 4. Auf der Achse 9 kann eine nicht dargestellte Federanordnung montiert sein, mit deren Hilfe die verschwenkbare Stirnwand 8 in Figur 1 ständig entgegen dem Uhrzeigersinn um die Achse 9 gegen einen ebenfalls nicht dargestellten Anschlag gedrückt wird, um die in Figur 1 dargestellte Position einzunehmen. Von Hand läßt sich die verschwenkbare Stirnwand 8 in Figur 1 ein wenig um die Achse 9 im Uhrzeigersinn gegen einen weiteren Anschlag verschwenken, um eine an der Innenseite der verschwenkbaren Stirnwand 8 vorhandene Rastnase 10 verschwenken zu können, wie ebenfalls noch erläutert wird.

Im Innern der Haltevorrichtung 1 befindet sich ein Träger 11, der aus einem Boden 12 und zwei parallel im Abstand einander gegenüberliegenden Trägerseitenwänden 13 und 14 besteht, die am Boden 12 befestigt sind und von diesem senkrecht abstehen. An dem der festen Stirnwand 5 zugewandten Ende des Bodens 12 ist dieser um eine Achse 15 schwenkbar gelagert, die von den Seitenwänden 2 und 3 gehalten wird und parallel zum Boden 4 verläuft. Dabei schmiegen sich die Trägerseitenwände 13 und 14 an die Innenflächen der Seitenwände 2 und 3 an. Genauer gesagt sind die Trägerseitenwände 13 und 14 in innenseitige Ausnehmungen der Seitenwände 2 und 3 eingelassen, so daß die Innenflächen der Seitenwände 2 und 3 mit den Innenflächen der Trägerseitenwände 13 und 14 fluchten.

Zwischen dem Boden 4 der Haltevorrichtung 1 und dem Boden 12 des Trägers 11 befindet sich eine nicht dargestellte Druckfedereinrichtung, die ständigversucht, den Träger 11 in Figur 1 gegen den Uhrzeigersinn um die Achse 15 zu verschwenken. Die in dieser Richtung äußerste Verschwenkstellung des Trägers 11 ist in Figur 1 gezeigt. Die Verschwenkbewegung wird dadurch begrenzt, daß die zur festen Stirnwand 5 weisenden Stirnkanten der Trägerseitenwände 13 und 14 gegen die entsprechenden Kanten der in den Seitenwänden 2 und 3 vorhandenen Ausnehmungen für die Trägerseitenwände 13 und 14 schlagen. Dagegen wird die Verschwenkbewegung des Trägers 11 im Uhrzeigersinn um die Achse 15 in Figur 1 dadurch begrenzt, daß der Träger 11 mit seinem Boden 12 auf dem Boden 4 der Haltevorrichtung 1 zu liegen kommt.

An dem der verschwenkbaren Stirnwand 8 zugewandten Ende des Bodens 12 des Trägers 11 befindet sich eine an diesem angelenkte Klappe 16, die zum Beispiel um eine parallel zum Boden 12 verlaufende Achse 17 schwenkbar ist. Das freie Ende der Klappe 16 schleift ständig auf dem Boden 4, wobei sich die Klappe 16 niemals unter den Boden 12 drehen kann. Wird der Träger 1 1 in Richtung auf den Boden 4 gedrückt, so wird die Klappe 16 entgegen dem Uhrzeigersinn um die Achse 17 in Figur 1 verschwenkt und kommt schließlich auf dem Boden 4 zu liegen. Durch die Klappe 16 wird verhindert, daß versehentlich Gegenstände unter den Boden 12 des Trägers 11 gelangen können.

Sämtliche zuvor erwähnten Achsen 9, 15 und 17 könnten auch durch Achsstummel ersetzt sein.

Die Figur 2 zeigt die Haltevorrichtung nach Figur 1 mit aufgesetztem Handapparat 18 eines Autotelefons, der noch nicht mit der Haltevorrichtung verriegelt ist. Der Handapparat 18 befindet sich in Figur 2 in seiner sogenannten zweiten Position, in der die Hauptflächen des Handapparats 18 im wesentlichen quer bzw. senkrecht zu den Seitenwänden 2 und 3 verlaufen. Die Hauptflächen sind hier die die Bedienungs- und Anzeigeeinrichtungen des Handapparats 18 enthaltenden Flächen, also seine Vorderseite und seine Rückseite.

Entsprechend der Figur 2 liegt der Handapparat 18 mit seiner zur Haltevorrichtung weisenden Hauptfläche zum einen auf den oberen Stirnkanten der Trägerseitenwände 13 und 14 auf, die sich in Längsrichtung der Haltevorrichtung 1 gesehen etwa mittig zur Haltevorrichtung 1 befinden. Am unteren Ende des Handapparats 18, also dort, wo er mit einer Telefonleitung 19 verbunden ist, liegt der Handapparat 18 mit seiner Hauptfläche auf den der festen Stirnwand 5 benachbarten Stirnkantenbereichen der Seitenwände 2 und 3 auf, während er sich andererseits mit seiner unteren Stirnwand am oberen Teil der festen Stirnwand 5 abstützt. Dabei übergreifen die Bügel 6 den Handapparat 18 in diesem Bereich zu einem gewissen Teil. Genauer gesagt entspricht der Höhenabstand der nach innen weisenden Bügel 6 von den jeweiligen Stirnkanten der Seitenwände 2 und 3 benachbart zur Stirnwand 5 wenigstens annähernd der Dicke des Handapparats 18 an seinem unteren Ende. Die dort herauskommende Telefonleitung 19 wird durch den Schlitz 7 hindurchgeführt.

In diesem Zustand wird der Handapparat 18 von der Haltevorrichtung 1 abgehoben gehalten, da die nicht dargestellte Federvorrichtung zwischen Boden 4 und Boden 12 des Trägers 11 letzteren ständig nach oben bzw. außen zu drücken versucht. Durch die Federkraft wird dabei das Gewicht von Träger 11 und Handapparat 18 überwunden, so daß der gezeigte Zustand aufrechterhalten bleibt. Um zu verhindern, daß der Handapparat 18 in dieser Position vom Träger 11 herunterfällt, können an der zum Träger 11 weisenden Hauptfläche des Handapparats 18 zusätzliche Längsstege vorhanden sein, die zwischen den Trägerseitenwänden 13 und 14 zu liegen kommen und sich klemmend an deren Innenseiten anschmiegen.

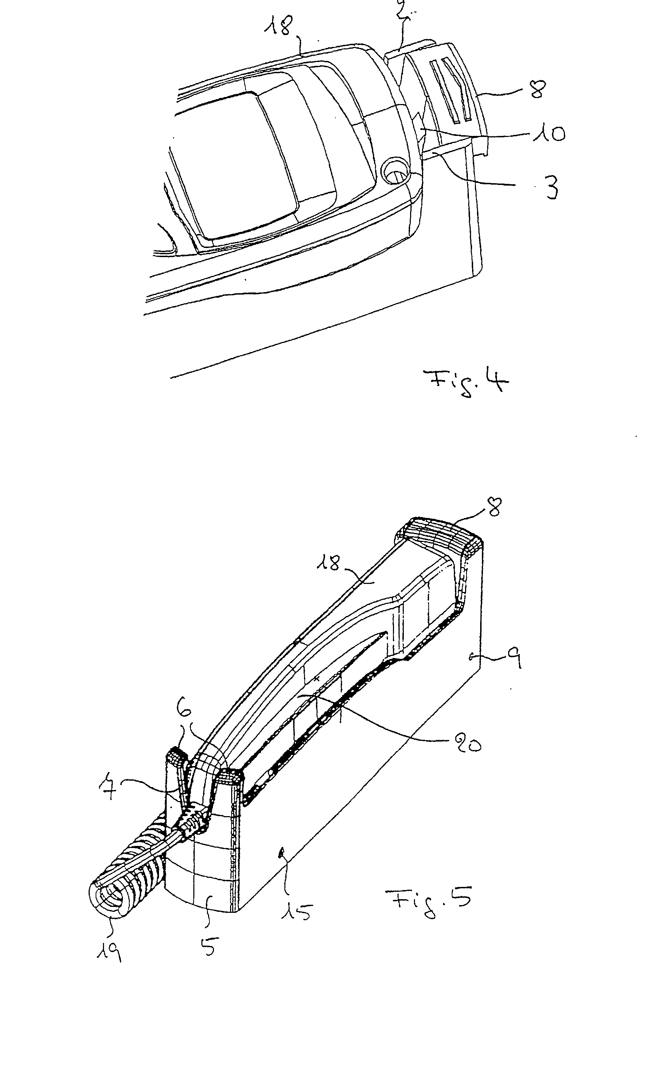

Drückt man den in Figur 2 nach oben weisenden Handapparat 18 in Richtung zur Haltevorrichtung 1, so gelangt man zum Zustand nach Figur 3. Bei diesem Vorgang wird der Träger 11 im Uhrzeigersinn um die Achse 15 in Figur 2 verschwenkt, und zwar entgegen der Kraft der zwischen seinem Boden 12 und dem Boden 4 liegenden Federanordnung, bis er schließlich ganz in der Haltevorrichtung versenkt ist und der Handapparat 18 sich auch auf weiteren Stirnkantenbereichen der Seitenwände 2 und 3 abstützen kann. Dabei ist die Kontur der Stirnkanten der Seitenwände 2 und 3 an die Kontur der zu ihnen weisenden Hauptfläche des Handapparats 18 angepaßt, so daß im heruntergerückten Zustand des Handapparats 18 eine weitgehend geschlossene bzw. kompakte Einheit vorhanden ist.

Bei dem genannten Herunterdrücken des Handapparats 18 bleibt dieser mit seinem unteren Ende unterhalb der Bügel 6 und drückt schließlich mit seiner diesem Ende gegenüberliegenden Stirnwand über die Rastnase 10 die verschwenkbare Stirnwand 8 um die Achse 9 nach außen. Bei noch weiterem Herunterdrücken des Handapparats 18 rastet schließlich die Rastnase 10 in eine nicht dargestellte Ausnehmung an der ihr gegenüberliegenden Stirnseite des Handapparats 18 ein, um somit den Handapparat 18 mit der Haltevorrichtung 1 zu verriegeln. Dabei drücken Rastnase 10 und/oder Stirnwand 8 den Handapparat 18 gegen die Bügel 6.

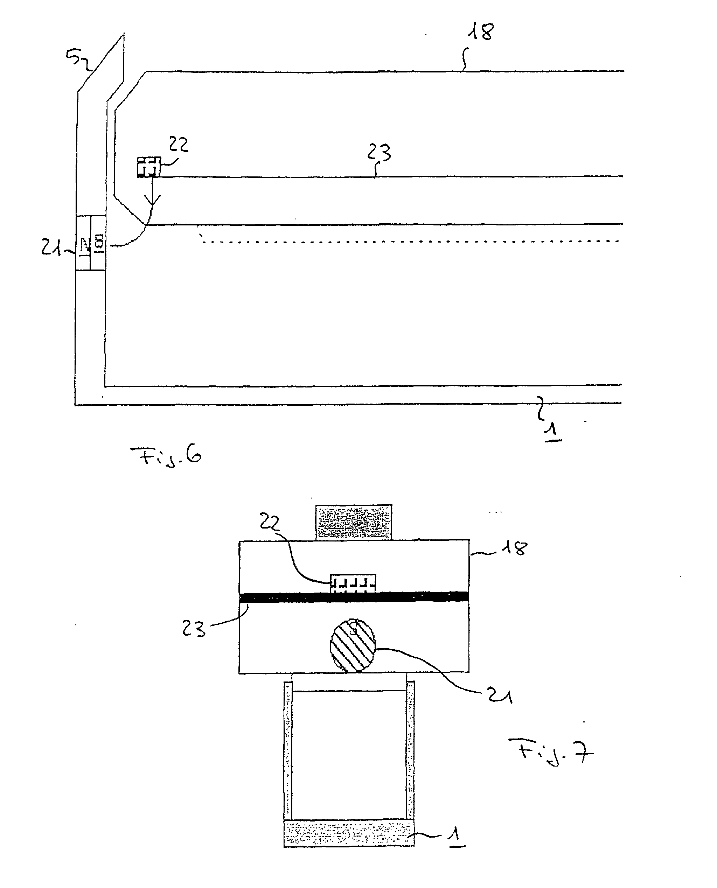

Die Figur 4 läßt erkennen, daß der Verriegelungszustand dadurch wieder aufgehoben werden kann, daß der obere Teil der verschwenkbaren Stirnwand 8 mit Finger oder Daumen betätigt werden kann, um die Stirnwand 8 nach außen zu verschwenken und damit die Rastnase 10 aus der genannten Ausnehmung herauszuführen. Jetzt wird infolge der Federkraft der Träger 11 nach außen gedrückt und mit ihm der Handapparat 18. Diese Verschwenkbewegung kann geschwindigkeitsgesteuert ablaufen, und zwar mit Hilfe eines die Federkraft steuernden Dämpfungselements.

Die Figur 5 zeigt dieselbe Haltevorrichtung 1 wie die Figur 1, jedoch befindet sich jetzt der in die Haltevorrichtung 1 eingesetzte Handapparat 18 in einer sogenannten ersten Position. In dieser Position liegen die Hauptflächen des Handapparats 18, also seine Vorder- und seine Rückseite den jeweiligen Seitenwänden 2, 3 gegenüber. Der Träger 11 ist hier vollständig in die Haltevorrichtung 1 hineingefahren. Die Rastnase 10 an der Innenseite der verschwenkbaren Stirnwand 8 greift in die entsprechende Ausnehmung an der oberen Stirnfläche des Handapparats 18 ein und drückt diesen, wie auch im Falle der Figur 3, gegen die feste Stirnwand 5, so daß das untere Ende des Handapparats 18 unterhalb der Bügel 6 gehalten wird. Der Handapparat 18 liegt dabei mit einer seiner Seitenflächen auf dem Boden 4 der Haltevorrichtung 1 sowie auf dem Boden 12 des Trägers 11 auf. Dabei ist der Höhenabstand zwischen den nach innen weisenden Bügeln und dem Boden 4 der Haltevorrichtung 1 so gewählt, daß er praktisch der Breite des Handapparats 18 an seinem unteren Ende entspricht. Auch jetzt ragt wieder die Telefonleitung 19 durch den Schlitz 7 nach außen.

Wird in Figur 5 die verschwenkbare Stirnwand 8 mit Hilfe von Daumen oder Finger nach außen verschwenkt, so gibt die Rastnase 10 den Handapparat 18 frei, so daß der Träger 11 und mit ihm der Handapparat 18 herausgeschwenkt werden. Der Handapparat 18 kann dann von der Haltevorrichtung 1 abgenommen werden.

Natürlich kann statt des Handapparats 18 auch eine andere Telefoneinheit in die Haltevorrichtung 1 eingesetzt bzw. auf diese aufgesetzt werden, sofern die Abmessungen im wesentlichen übereinstimmen. Bei der Telefoneinheit kann es sich zum Beispiel auch um ein Mobiltelefon, oder dergleichen, handeln.

Die Figur 5 läßt im übrigen noch die in Längsrichtung der Telefoneinheit verlaufenden Führungen 20 erkennen, die bereits zuvor erläutert wurden und zur Sicherung der Telefoneinheit auf dem Träger 11 dienen, wenn dieser herausgeschwenkt ist.

In Abwandlung der oben beschriebenen Ausführungsbeispiele kann die Haltevorrichtung auch so ausgebildet sein, daß in einem stirnseitigen Bereich der Seitenwände feste und in Richtung zum anderen stirnseitigen Bereich der Seitenwände weisende Stifte oder Ansätze vorhanden sind, die in das ihnen zugewandte Ende der Telefoneinheit eingreifen, wenn sich diese sowohl in der ersten Position als auch in der zweiten Position befindet. Diese Stifte können dann in Ausnehmungen eingreifen, die sich zum Beispiel an der ihnen gegenüberliegenden Stirnfläche der Telefoneinheit befinden. Liegt die Telefoneinheit in der zweiten Position, so können zwei Stifte im Abstand zueinander auf einer Linie angeordnet sein, die parallel zum Boden 4 verläuft. Darüber hinaus ist an dieser Stirnseite ein weiterer Stift auf einer mittigen Vertikallinie in der Nähe des Bodens 4 vorhanden, der in eine entsprechende stirnseitige Ausnehmung der Telefoneinheit eingreift, wenn sich diese innerhalb der Haltevorrichtung in der ersten Position befindet. In der Telefoneinheit befinden sich in jedem Fall nur zwei Ausnehmungen für die Stifte, und zwar links und rechts vom Anschluß für das Kabel 19.

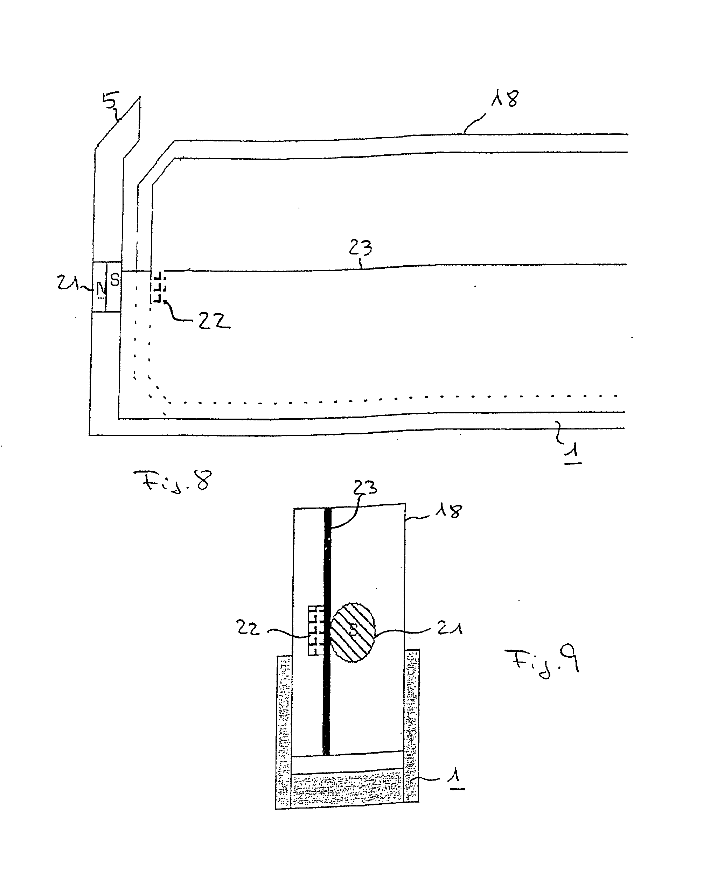

Die Figuren 6 bis 9 zeigen jeweils im Längs- und im Querschnitt die Haltevorrichtung mit Telefoneinheit 18 in der zweiten bzw. ersten Position innerhalb der Haltevorrichtung liegend. In der Stirnwand 5 der Haltevorrichtung 1 ist ein Permanentmagnet 21 angeordnet, dessen Magnetfeldlinien auch ins Innere der Haltevorrichtung 1 laufen. An dem der Stirnwand 5 angrenzenden Ende der Telefoneinheit 18 befindet sich in dieser auf einer Schaltungskarte 23 liegend ein Hallelement-Schalter 22. Dieser Hallelement-Schalter 22 wird immer dann vom Magnetfeld des Permanentmagneten 21 beaufschlagt, wenn sich die Telefoneinheit 18 in der zweiten oder ersten Position innerhalb der Haltevorrichtung 1 befindet oder in der zweiten Position auf dem Träger 11 1 liegt. Alternativ wäre es auch möglich, Permanentmagnet und Hallelement-Schalter an den jeweils gegenüberliegenden Stirnwänden von Haltevorrichtung 1 und Telefoneinheit 18 anzuordnen, also im Bereich der Stirnwand 8 und der ihr gegenüberliegenden Wand der Telefoneinheit 18.

Durch den Hallelement-Schalter 22 kann erkannt werden, ob sich die Telefoneinheit 18 eines Autotelefons bzw. eines Mobiltelefons in der Haltevorrichtung befindet. Dazu ist es nicht unbedingt erforderlich, die Position von Permanentmagnet 21 und Hallelement-Schalter 22 exakt aufeinander auszurichten, wie dies bei herkömmlichen Reed-Relays der Fall ist. Der Hallelement-Schalter 22 eignet sich daher besonders zur Verwendung bei der vorliegenden Erfindung, da hier die Telefoneinheit 18 in zwei unterschiedlichen Positionen in bzw. auf der Haltevorrichtung 1 positioniert werden kann.

Der Hallelement-Schalter kann einerseits signalisieren, daß bei einem eingehenden Anruf die Telefoneinheit 18 aus der Haltevorrichtung 1 genommen und damit der Anruf angenommen wurde. Andererseits kann bei einer Telefoneinrichtung von der Telefoneinheit 18 auf eine Freisprechanlage umgeschaltet werden, sobald die Telefoneinheit 18 wieder in die Haltevorrichtung 1 gelegt wurde.

## Patentansprüche

1. Haltevorrichtung (1) zur Aufnahme einer Telefoneinheit (18), insbesondere eines Handapparats eines Autotelefons oder eines Mobiltelefons, mit zwei zur Positionierung der Telefoneinheit (18) im Abstand zueinander angeordneten Seitenwänden (2, 3), **dadurch gekennzeichnet, daß** der Abstand der Seitenwände (2, 3) kleiner ist als die Breite der Telefoneinheit (18), um die Telefoneinheit (18) in einer ersten Position zwischen sich aufzunehmen, in der Hauptflächen der Telefoneinheit (18) den Seitenwänden (2, 3) gegenüberliegen, und um die Telefoneinheit (18) in einer zweiten Position auf Längskanten der Seitenwände (2, 3) zu lagern, in der die Hauptflächen der Telefoneinheit (18) quer zu den Seitenwänden (2, 3) liegen.

2. Haltevorrichtung nach Anspruch 1, **dadurch gekennzeichnet, daß** der Abstand der Seitenwände (2, 3) wenigstens annähernd der Dicke der Telefoneinheit (18) entspricht.

3. Haltevorrichtung nach Anspruch 1 oder 2, **dadurch gekennzeichnet, daß** die Seitenwände (2, 3) parallel zueinander verlaufen.

4. Haltevorrichtung nach einem der Ansprüche 1 bis 3, **dadurch gekennzeichnet, daß** die Kontur der Seitenwand-Längskanten, auf denen die Telefoneinheit (18) in der zweiten Position mit ihrer einen Hauptfläche zu liegen kommt, an die Kontur dieser einen Hauptfläche angepaßt ist.

5. Haltevorrichtung nach einem der Ansprüche 1 bis 4, **dadurch gekennzeichnet, daß** in einem stirnseitigen Bereich der Seitenwände (2, 3) ein fester und in Richtung zum anderen stirnseitigen Bereich der Seitenwände weisender Bügel (6) angeordnet ist, der die Seitenwände (2, 3) in Höhenrichtung so weit überragt, daß er ein Ende der Telefoneinehit (18), die sich sowohl in der ersten als auch in der zweiten Position befinden kann, übergreift.

6. Haltevorrichtung nach Anspruch 5, **dadurch gekennzeichnet, daß** der Bügel (6) einen mittigen Schlitz (7) aufweist.

7. Haltevorrichtung nach Anspruch 5 oder 6, **dadurch gekennzeichnet, daß** am genannten anderen stirnseitigen Bereich der Seitenwände (2, 3) wenigstens eine schwenkbare und zur genannten einen Stirnseite weisende Rastnase (10) angeordnet ist.

8. Haltevorrichtung nach einem der Ansprüche 1 bis 7, **dadurch gekennzeichnet, daß** zwischen den Seitenwänden (2, 3) ein verschwenkbarer und durch Preßkraft nach außen gedrückter Träger (11) für die Telefoneinheit (18) angeordnet ist.

9. Haltevorrichtung nach Anspruch 8, **dadurch gekennzeichnet, daß** die Bewegung des Trägers (11) durch eine Dämpfungseinrichtung gedämpft ist.

10. Haltevorrichtung nach Anspruch 8 oder 9, **dadurch gekennzeichnet, daß** der Träger (11) zwei im Abstand zueinander liegende Trägerseitenwände (13, 14) aufweist, wobei dieser Abstand so gewählt ist, daß er wenigstens annähernd der Dicke der Telefoneinheit (18) im Bereich des Trägers (11) entspricht.

11. Haltevorrichtung nach Anspruch 10, **dadurch gekennzeichnet, daß** der Abstand der Trägerseitenwände (13, 14) voneinander so gewählt ist, daß ein Eingriff von an einer Hauptfläche der Telefoneinheit (18) angeordneten Führungen (20) möglich ist, wenn die Telefoneinheit (18) mit dieser Hauptfläche auf den Träger (11) aufgelegt wird.

12. Haltevorrichtung nach einem der Ansprüche 8 bis 11, **dadurch gekennzeichnet, daß** die zur Telefoneinheit (18) weisende Kontur des Trägers (11) so gewählt ist, daß sie bei eingeschwenktem Träger (11) wenigstens bereichsweise mit der Kontur der Seitenwand-Längskanten zur Deckung kommt bzw. nicht über diese hinaussteht.

13. Haltevorrichtung nach einem der Ansprüche 8 bis 12, **dadurch gekennzeichnet, daß** der Träger (11) sich bis in innenseitige Ausnehmungen der Seitenwände (2, 3) erstreckt.

14. Haltevorrichtung nach Anspruch 13, **dadurch gekennzeichnet, daß** durch die innenseitigen Ausnehmungen erhaltene Kanten der Seitenwände (2, 3) als Anschlag für den Träger (11) dienen, wenn dieser durch die Preßkraft herausgeschwenkt wird.

15. Haltevorrichtung nach einem der Ansprüche 1 bis 14, **dadurch gekennzeichnet, daß** sie als separate Baueinheit mit Boden (4) ausgebildet ist.

16. Haltevorrichtung nach Anspruch 15, **dadurch gekennzeichnet, daß** an dem zur schwenkbaren Stirnwand (8) weisenden bodenseitigen Ende des Trägers (11) eine frei schwenkbar und mit ihrem freien Ende den Boden (4) erreichende Sperre (16), insbesondere eine Klappe, angeordnet ist.

17. Haltevorrichtung nach einem der Ansprüche 1 bis 4 und 7 bis 16, **dadurch gekennzeichnet, daß** in einem stirnseitigen Bereich der Seitenwände (2, 3) feste und in Richtung zum anderen stirnseitigen Bereich der Seitenwände (2, 3 ) weisende Stifte oder Ansätze vorhanden sind, die in das ihnen zugewandte Ende der Telefoneinheit (18) eingreifen, wenn sich diese sowohl in der ersten Position als auch in der zweiten Position befindet.

18. Haltevorrichtung nach einem der Ansprüche 1 bis 17, **dadurch gekennzeichnet, daß** in oder an einer ihrer Stirnwände (5, 8) ein Permanentmagnet (21) angeordnet ist, der in Wirkverbindung mit einem Hallelement-Schalter (22) steht, wenn sich die Telefoneinheit (18) in der ersten oder zweiten Position befindet.

## Claims

1. Holding device (1) for accommodating a telephone unit (18), in particular a handset of a car telephone or of a mobile telephone, having two side walls (2, 3) that are arranged at a distance from each other for positioning the telephone unit (18), **characterized in that** the distance between the side walls (2, 3) is smaller than the width of the telephone unit (18), in order to accommodate the telephone unit (18) between them in a first position in which main faces of the telephone unit (18) are situated opposite the side walls (2, 3), and in order to store the telephone unit (18) in a second position, on longitudinal edges of the side walls (2, 3), in which the main faces of the telephone unit (18) are situated transversely with respect to the side walls (2, 3).

2. Holding device according to Claim 1, **characterized in that** the distance between the side walls (2, 3) corresponds at least approximately to the thickness of the telephone unit (18).

3. Holding device according to Claim 1 or 2, **characterized in that** the side walls (2, 3) run parallel to each other.

4. Holding device according to one of Claims 1 to 3, **characterized in that** the contour of the side wall longitudinal edges on which, in the second position, the telephone unit (18) comes to lie with its one main face is matched to the contour of this one main face.

5. Holding device according to one of Claims 1 to 4, **characterized in that**, in one end region of the side walls (2, 3), there is arranged a bracket (6) that is fixed and points in the direction of the other end region of the side walls and projects beyond the side walls (2, 3) in the vertical direction to such an extent that it engages over one end of the telephone unit (18), which may be in either the first or the second position.

6. Holding device according to Claim 5, **characterized in that** the bracket (6) has a central slot (7).

7. Holding device according to Claim 5 or 6, **characterized in that** at least one latching tab (10) that is pivotable and points toward said one end is arranged on said other end region of the side walls (2, 3).

8. Holding device according to one of Claims 1 to 7, **characterized in that** a carrier (11) which is intended for the telephone unit (18) and which is pivotable and is pressed outward by a pressing force is arranged between the side walls (2, 3).

9. Holding device according to Claim 8, **characterized in that** the movement of the carrier (11) is damped by a damping device.

10. Holding device according to Claim 8 or 9, **characterized in that** the carrier (11) has two carrier side walls (13, 14) which are situated at a distance from each other, this distance being selected such that it corresponds at least approximately to the thickness of the telephone unit (18) in the region of the carrier (11).

11. Holding device according to Claim 10, **characterized in that** the distance of the carrier side walls (13, 14) from each other is selected such that the engagement of guides (20) that are arranged on a main face of the telephone unit (18) is possible when the telephone unit (18) is placed onto the carrier (11) by way of this main face.

12. Holding device according to one of Claims 8 to 11, **characterized in that** the contour of the carrier (11) that points toward the telephone unit (18) is selected such that, when the carrier (11) is pivoted in, this contour is brought into coincidence, at least in some areas, with the contour of the side wall longitudinal edges, or does not project beyond this contour.

13. Holding device according to one of Claims 8 to 12, **characterized in that** the carrier (11) extends into internal recesses in the side walls (2, 3).

14. Holding device according to Claim 13, **characterized in that** edges of the side walls (2, 3) which are obtained as a result of the internal recesses serve as a stop for the carrier (11) when the latter is pivoted out by the pressing force.

15. Holding device according to one of Claims 1 to 14, **characterized in that** it is constructed as a separate structural unit with a base (4).

16. Holding device according to Claim 15, **characterized in that** a barrier (16), in particular a flap, that can pivot freely and reaches the base (4) with its free end is arranged on that bottom end of the carrier (11) which points toward the pivotable end wall (8).

17. Holding device according to one of Claims 1 to 4 and 7 to 16, **characterized in that** in an end region of the side walls (2, 3) there are pins or attachments which are fixed, point in the direction of the other end region of the side walls (2, 3) and engage **in that** end of the telephone unit (18) which faces them when the latter is situated in either the first position or in the second position.

18. Holding device according to one of Claims 1 to 17, **characterized in that** a permanent magnet (21) is arranged in or on one of its end walls (5, 8) and is operatively connected to a Hall-element switch (22) when the telephone unit (18) is situated in the first or second position.

## Revendications

1. Dispositif support (1) pour recevoir un appareil téléphonique (18), en particulier un combiné téléphonique d'un téléphone de voiture ou d'un téléphone mobile, avec deux parois latérales (2, 3) - espacées par une certaine distance l'une de l'autre - pour positionner l'appareil téléphonique (18), **caractérisé en ce que** la distance entre les parois latérales (2, 3) est plus petite que la largeur de l'appareil téléphonique (18), pour pouvoir placer l'appareil téléphonique (18) entre elles dans une première position, dans laquelle les surfaces principales de l'appareil téléphonique (18) font face aux parois latérales (2, 3) et pour pouvoir poser l'appareil téléphonique (18) dans une seconde position sur les bords longitudinaux des parois latérales (2, 3), dans laquelle les surfaces principales de l'appareil téléphonique (18) sont disposées perpendiculairement aux parois latérales (2, 3).

2. Dispositif support selon la revendication 1, **caractérisé en ce que** la distance entre les parois latérales (2, 3) correspond au moins approximativement à l'épaisseur de l'appareil téléphonique (18).

3. Dispositif support selon la revendication 1 ou la revendication 2, **caractérisé en ce que** les parois latérales (2, 3) sont disposées parallèlement l'une à l'autre.

4. Dispositif support selon l'une des revendications 1 à 3, **caractérisé en ce que** le contour des bords longitudinaux des parois latérales, sur lesquels l'appareil téléphonique (18) vient reposer par une de ses surfaces principales dans la seconde position, correspond au contour de cette surface principale.

5. Dispositif support selon l'une des revendications 1 à 4, **caractérisé en ce que** dans une première région frontale des parois latérales (2, 3), il est prévu une partie recourbée fixe (6), qui est orientée dans la direction de l'autre région frontale des parois latérales et qui dépasse les parois latérales (2, 3) dans la direction de la hauteur de manière à pouvoir retenir une extrémité de l'appareil téléphonique (18) qui peut se trouver aussi bien dans la première que dans la seconde position.

6. Dispositif support selon la revendication 5, **caractérisé en ce que** la partie recourbée (6) présente une fente médiane (7).

7. Dispositif support selon la revendication 5 ou la revendication 6, **caractérisé en ce que** dans ladite autre région frontale des parois latérales (2, 3), il est prévu au moins une saillie de retenue (10) qui est capable de pivoter et qui est orienté dans la direction de ladite première région frontale.

8. Dispositif support selon l'une des revendications 1 à 7, **caractérisé en ce qu'**entre les parois latérales (2, 3), il est prévu un moyen de soutien (11) pour l'appareil téléphonique (18), ce moyen étant capable de pivoter en étant sollicité vers l'extérieur par une force de poussée.

9. Dispositif support selon la revendication 8, **caractérisé en ce que** le mouvement du moyen de soutien (11) est amorti par un dispositif amortisseur.

10. Dispositif support selon la revendication 8 ou la revendication 9, **caractérisé en ce que** le moyen de soutien (11) comporte deux parois latérales (13, 14) de soutien disposées à une certaine distance l'une de l'autre, cette distance étant choisie de manière à correspondre, au moins approximativement, à l'épaisseur de l'appareil téléphonique (18) dans la région du moyen de soutien (11).

11. Dispositif support selon la revendication 10, **caractérisé en ce que** la distance entre les parois latérales (13, 14) du moyen de soutien est choisie de manière à ce qu'un engagement avec des éléments de guidage (20) agencés sur une surface principale de l'appareil téléphonique (18) puisse intervenir quand l'appareil téléphonique (18) est posé par cette surface principale sur le moyen de soutien (11).

12. Dispositif support selon l'une des revendications 8 à 11, **caractérisé en ce que** le contour du moyen de soutien (11) faisant face à l'appareil téléphonique (18) est choisi de manière à ce qu'il recouvre, au moins en partie, le contour des bords longitudinaux des parois latérales ou du moins qu'il ne dépasse pas ceux-ci, lorsque le moyen de soutien (11) est pivoté vers la position enfoncée.

13. Dispositif support selon l'une des revendications 8 à 12, **caractérisé en ce que** le moyen de soutien (11) se trouve logé dans des évidements aménagés dans les côtés internes des parois latérales (2, 3).

14. Dispositif support selon la revendication 13, **caractérisé en ce que** les bords que comportent les parois latérales (2, 3) du fait de la présence des évidements sur leurs côtés internes, servent de butées au moyen de soutien (11) lorsque celui-ci est sollicité par la force de poussée pour pivoter vers l'extérieur.

15. Dispositif support selon l'une des revendications 1 à 14, **caractérisé en ce que** celui-ci est réalisé sous la forme d'une unité séparée avec un fond (4).

16. Dispositif support selon la revendication 15, **caractérisé en ce que** l'extrémité du moyen de soutien (11) faisant face à la paroi frontale pivotante (8) comporte sur son fond un dispositif d'obstruction (16) et en particulier un volet, qui est capable de pivoter librement et qui vient en contact par son extrémité libre avec le fond (4)

17. Dispositif support selon l'une des revendications 1 à 4 et 7 à 16, **caractérisé en ce que,** dans une première région frontale des parois latérales (2, 3), il y a des goujons ou des protubérances qui sont solidaires de cette région, qui sont orientés dans la direction de l'autre région frontale des parois latérales (2, 3) et qui sont prévus pour s'engager dans l'extrémité de l'appareil téléphonique (18) qui leur fait face, lorsque ce dernier se trouve aussi bien dans la première position que dans la seconde position.

18. Dispositif support selon l'une des revendications 1 à 17, **caractérisé en ce qu**'un aimant permanent (21) est disposé dans ou sur une de ses parois frontales (5, 8) pour coopérer avec un interrupteur / élément à effet de Hall (22) quand l'appareil téléphonique (18) se trouve dans la première ou dans la seconde position.
